**Europäisches Patentamt**

**European Patent Office**

**Office européen des brevets**

(19)

(11) Veröffentlichungsnummer: **0 123 196**
**B1**

(12)

# EUROPÄISCHE PATENTSCHRIFT

(45) Veröffentlichungstag der Patentschrift:
**29.06.88**

(21) Anmeldenummer: **84103943.1**

(22) Anmeldetag: **09.04.84**

(51) Int. Cl.⁴: **C 08 G 12/12,** C 08 G 12/04,
D 21 H 3/54

(54) **Verfahren zur Herstellung von wasserlöslichen kationischen Harnstoff-Formaldehyd-Harzen und deren Verwendung bei der Papierherstellung.**

(30) Priorität: **15.04.83 DE 3313726**

(43) Veröffentlichungstag der Anmeldung:
**31.10.84 Patentblatt 84/44**

(45) Bekanntmachung des Hinweises auf die Patenterteilung:
**29.06.88 Patentblatt 88/26**

(84) Benannte Vertragsstaaten:
**AT BE CH DE FR GB IT LI NL SE**

(56) Entgegenhaltungen:
**US-A-2 786 824**
**US-A-3 275 605**
**US-A-3 752 781**

(73) Patentinhaber: **BASF Aktiengesellschaft, Carl-Bosch- Strasse 38, D-6700 Ludwigshafen (DE)**

(72) Erfinder: **Pfohl, Sigberg, Dr., Am Maulbeerstueck 14, D-6720 Speyer (DE)**
Erfinder: **Guender, Wolf, Dr., Walter- Bruch-Strasse 25, D-6730 Neustadt (DE)**
Erfinder: **Diem, Hans, Dr., Kniebisstrasse 16, D-6800 Mannheim 1 (DE)**
Erfinder: **Flory, Klaus, Dr., Im Schilling 2, D-6906 Leimen (DE)**

# 0 123 196

## Beschreibung

Aus der US-PS-3 275 605 ist bekannt, Harnstoff und Formaldehyd in Gegenwart von Polyaminen zu wasserlöslichen Harzen zu kondensieren. Die Reaktionsteilnehmer werden zunächst im alkalischen pH-Bereich vorkondensiert, dann im sauren pH-Bereich bis zur beginnenden Gelbildung kondensiert, danach z. B. mit Formaldehyd einer Nachkondensation unterworfen und anschließend neutralisiert. Die Produkte eignen sich als Mittel zur Er höhung der Naßfestigkeit von Papier.

Aus der US-PS-3 752 781 ist ein Verfahren zur Herstellung von kationischen Harzen bekannt, bei dem man zunächst Harnstoff mit Polyalkyleniminen, z. B. Polyethylenimin, unter Abspaltung von Ammoniak zu Polyharnstoffen umsetzt und die Polyharnstoffe anschließend mit Harnstoff reagieren läßt und das Reaktionsprodukt methyloliert. Man erhält eine wäßrige Lösung eines kationischen Harzes, die durch Zugabe von Säure neutralisiert wird. Produkte dieser Art haben bisher keine Verwendung in der Papierindustrie gefunden, weil sie teuer und wenig wirksam sind und zu einer starken Vergilbung des Papiers führen.

Aufgabe der vorliegenden Erfindung ist es, stabile, kationisch modifizierte Harnstoff-Formaldehyd-Lösungen zur Verfügung zu stellen, die gegenüber bekannten Harzlösungen dieser Art eine verbesserte Wirksamkeit als Trocken- und Naßfestmittel bei der Herstellung von Papier haben und nicht in so starkem Maße zu einer Vergilbung des Papiers führen.

Die Aufgabe wird erfindungsgemäß gelöst mit einem Verfahren zur Herstellung von wasserlöslichen kationischen Harnstoff-Formaldehyd-Harzen durch Kondensieren von Harnstoff und Formaldehyd im Molverhältnis 1 : 1,5 bis 3 in Gegenwart von Polyaminen, wobei man die Mischung zunächst

a) bei pH-Werten von 8 bis 14 vorkondensiert, dann ansäuert und
b) bei pH-Werten von 1 bis 5 bis zur beginneden Gelbildung kondensiert,
c) pro Mol des eingesetzen Harnstoffs 0,3 bis 1,5 Mol Formaldehyd zusetzt,
d) eine Nachkondensation durchführt und
e) die Harzlösung anschließend neutralisiert,

wenn man pro Mol Harnstoff im Endprodukt 5 bis 50 g Polyethylenimin, das 20 bis 15.000 Ethylenimin-Einheiten einpolymerisiert enthält, als Polyamin einsetzt. Die so erhaltenen wasserlöslichen kationischen Harnstoff-Formaldehyd-Harze werden als Hilfsmittel bei der Herstellung von Papier zur Erhöhung der Trocken- und Naßfestigkeit des Papiers verwendet.

Harnstoff und Formaldehyd werden im Molverhältnis 1 : 1,5 bis 3 in Gegenwart von Polyethylenimin, das 20 bis 15.000, vorzugsweise 35 bis 1000 Ethylenimin-Einheiten einpolymerisiert enthält, kondensiert. Vorzugsweise verwendet man bei der Herstellung der Kondensate auf 1 Mol Harnstoff 2,0 bis 2,5 Mol Formaldehyd. Die Herstellung der Harzlösungen erfolgt so, daß man die oben genannten Komponenten miteinander mischt. Es liegt zunächst eine klare Lösung vor, die alkalisch reagiert. Die Vorkondensation gemäß der Stufe a) wird bei pH-Werten von 8 bis 14, vorzugsweise 9 bis 11 vorgenommen. Damit eine Reaktion eintritt, wird das Reaktionsgemisch auf 60 bis 100, vorzugsweise 70 bis 90° C erhitzt. Die Vorkondensation ist in Abhängigkeit von der Temperatur nach etwa 10 Minuten bis zu 2 Stunden beendet. Danach wird die wäßrige Lösung des Vorkondensates angesäuert und auf einen pH-Wert in dem Bereich von 1 bis 5 eingestellt. Zum Ansäuern kann man sowohl Mineralsäuren wie auch organische Säuren verwenden, z. B. Schwefelsäure, Phosphorsäure, Salzsäure, Ameisensäure, Essigsäure, p-Toluolsulfonsäure und Benzolsulfonsäure.

Gemäß Verfahrensstufe b) erfolgt die Kondensation bei pH-Werten in dem Bereich von 1 bis 5, vorzugsweise 2 bis 4,5 und Temperaturen zwischen 60 bis 100, vorzugsweise 70 bis 90°C. Die Kondensation wird soweit geführt, bis eine Gelbildung zu beobachten ist. Die Gelbildung ist daran zu erkennen, daß sich am Rührer - auch bei höheren Drehzahlen - keine Thrombe mehr ausbildet, sondern das Reaktionsprodukt am Rührer hochsteigt. Für die Kondensationsreaktion benötigt man in Abhängigkeit von der Temperatur 15 Minuten bis 3 Stunden, wobei den hohen Temperaturen die kurzen Reaktionszeiten zuzuordnen sind.

Nachdem sich ein Gel gebildet hat, wird zu dem Kondensationsprodukt, bezogen auf 1 Mol des eingesetzten Harnstoffs 0,3 bis 1,5 Mol Formaldehyd zugesetzt (Verfahrensstufe c)), und gemäß Verfahrensschritt d) eine Nachkondensation in dem Temperaturbereich von 60 bis 100, vorzugsweise 70 bis 90°C durchgeführt. Die Nachkondensation dauert etwa 10 Minuten bis zu 5 Stunden, Je nach der dabei eingestellten Temperatur. Gemäß Verfahrensstufe e) wird die Harzlösung neutralisiert. Zur Neutralisation verwendet man beispielsweise Natronlauge, Kalilauge, Ammoniak, Amine, Soda, Kaliumcarbonat, Natriumhydrogencarbonat oder Ammonium- oder Kaliumhydrogencarbonat oder ein Gemisch aus zwei oder mehreren Basen. Vorzugsweise verwendet man Soda. Man erhält auf diese Weise wäßrige Lösungen von kationischen Harnstoff-Formaldehyd-Harzen mit einem Feststoffgehalt von 25 bis 70, vorzugsweise 30 bis 45 Gew.-%. Der Feststoffgehalt der Lösungen kann leicht dadurch variiert werden indem man bei der Kondensation wäßrige Formaldehyd-Lösungen einer unterschiedlichen Konzentration oder para-Formaldehyd einsetzt. Die bei der Kondensation erhaltenen neutralen wäßrigen Lösungen von kationischen Harnstoff-Formaldehyd-Harzen können direkt oder gegebenenfalls nach einem Verdünnen mit Wasser - sie sind in jedem Verhältnis mit Wasser verdünnbar bei der Herstellung von Papier verwendet werden. Die Produkte werden dabei dem Papierstoff vor der Blattbildung zugesetzt. Bezogen auf trockenes Papier benötigt man 0,1 bis 3, vorzugsweise 0,5 bis 2 Gew.-% des kationischen Harnstoff-Formaldhyd-Harzes. Die Harze werden zwar bevorzugt der Papierstoff-Suspension vor der Blattbildung zugefügt, sie können jedoch auch auf die Oberfläche des bereits gebildeten Papiers, z. B. in der Leimpresse, aufgetragen werden. Die neuen Harzlösungen können bei allen in der Papierfabrikation verwendeten Rohstoffen, z. B. bei gebleichtem und ungebleichtem Zellstoff, Holzschliff, Altpapier usw.

2

verwendet werden. Die Vergilbungsneigung der mit Polyethylenimin modifizierten Harnstoff-Formaldehyd-Harze ist überraschend gering. Die Viskosität einer 25 gew.-%-igen Harzlösung beträgt bei einer Temperatur von 20°C 50 bis 250 mPas.

Die in den Beispielen angegebenen Teile sind Gewicht steile, die Angaben in Prozent beziehen sich auf das Gewicht der Stoffe, sofern nichts anderes angegeben ist.

**Beispiel 1**

585 Teile (7,8 Mol) Formaldehyd (40 %-ige wäßrige Lösung), 205 Teile (3,42 Mol) Harnstoff und 207 Teile Wasser wurden mit 50 Teilen Polyethylenimin, das 15.000 Ethylenimin-Einheiten einpolymerisiert enthielt als 50 % wäßrige Lösung, gemischt und unter Rühren auf eine Temperatur von 80°C erwärmt.

Nachdem man die Mischung eine Stunde lang bei einer Temperatur von 80°C gerührt hatte, setzte man Ameisensäure zu, bis der pH-Wert des Reaktionsgemisches 3,7 betrug und kondensierte bei diesem pH-Wert und einer Temperatur von 80°C die Mischung bis zu einer beginnenden Gelierung, die daran erkenntlich war, daß das Reaktionsgemisch am sich drehenden Rührer hochstieg. Die beginnende Gelierung ist mit einem sehr starken Anstieg der Viskosität der Harzlösung verbunden. Die Kondensation dauerte etwa 25 Minuten. Im Anschluß an die Hauptkondensation setzte man 226 Teile (3,01 Mol) Formaldehyd (40 %-ige wäßrige Lösung) und 86 Teile Wasser zu und erhitzte das Reaktionsgemisch zur Nachkondensation noch 1 Stunde auf eine Temperatur von 70°C. Dann fügte man zur Neutralisation des Reaktionsgemisches 105 Teile einer 20 %-igen wäßrigen Sodalösung zu. Man erhielt eine etwa 30 % Feststoffe enthaltende wäßrige Lösung eines mit Polyethylenimin modifizierten Harnstoff-Formaldehyd-Harzes.

**Beispiel 2**

565 Teile (7,5 Mol) Formaldehyd (40 %-ige wäßrige Lösung), 220 Teile (3,7 Mol) Harnstoff und 190 Teile Wasser wurden mit 50 Teilen einer 50 %-igen Lösung von Polyethylenimin, das 35 Ethylenimin-Einheiten einpolymerisiert enthielt, gemischt und unter Rühren auf eine Temperatur von 70°C erwärmt.

Nachdem die Mischung 30 Minuten bei dieser Temperatur gerührt hatte, wurde mit Ameisensäure ein pH-Wert des Gemisches von 4,3 eingestellt. Bei diesem pH-Wert und der Temperatur von 70°C wurde bis zur beginnenden Gelierung kondensiert (s.a. Beispiel 1). Die Kondensation dauerte ca. 2 Stunden.

Im Anschluß an diese Hauptkondensation wurde ein Gemisch aus 151 Teilen (2,0 Mol) Formaldehyd (50 %-ige Lösung), 4 Teilen Ethylendiamin, 30 Teilen Wasser und 50 Teilen Methanol zugesetzt und mit 20 % Sodalösung ein pH-Wert von 5,8 eingestellt. Dann wurde eine Stunde bei 70°C nachkondensiert und abschließend der pH-Wert auf 6,2 eingestellt.

Man erhielt eine ca. 35 % Feststoffe enthaltende wäßrige Lösung eines mit Polyethylenimin modifizierten Harnstoff-Formaldehyd-Harzes.

**Vergleichsharz 1**

439,8 Teile (6,6 Mol) Formaldehyd 40 %, 19 Teile (0,19 Mol) Diethylentriamin, 194,5 Teile (3,25 Mol) Harnstoff und 210 Teile Wasser werden auf 70°C erwärmt, mit Ameisensäure versetzt bis der pH-Wert des Gemisches bei 4,5 liegt und so lange bei 70°C kondensiert, bis eine mit Wasser 1 : 1 verdünnte Probe beim Abkühlen auf 20°C trüb wird.

Dann werden 132,7 Teile (1,75 Mol) Formaldehyd 40 % zugesetzt, der pH-Wert mit 20 % Sodalösung auf 6,2 eingestellt und eine Stunde bei 70°C nachkondensiert. Danach wird das Gemisch abgekühlt und mit Sodalösung neutralisiert.

**Vergleichsharz 2**

542 Teile (7,2 Mol) Formaldehyd 40 %, 165 Teile (2,75 Mol) Harnstoff, 30 Teile Polyethylenimin mit 5 Ethylenimineinheiten im Molekül und 120 Teile Wasser werden auf 60°C erwärmt und eine Stunde bei dieser Temperatur gehalten. Dann wird mit Schwefelsäure ein pH-Wert des Gemisches von 4,5 eingestellt und so lange kondensiert, bis das Gemisch geliert ist. Danach werden 260 Teile Wasser und 130 Teile (1,7 Mol) Formaldehyd 40 % zugefügt. Mit Natronlauge wird pH 6,4 eingestellt und bei 70°C eine Stunde nachkondensiert und dann abgekühlt.

**Vergleichsharz 3**

Gemäß der US-PS-3 752 781, Beispiel 1, wurden 658 Teile Polyethylenimin, das 30 Ethylenimin-Einheiten einpolymerisiert enthielt, in einem Kessel mit 790 Teilen Harnstoff gemischt und auf 60°C erhitzt. Die Temperatur wurde dann auf 85°C erhöht und der Druck erniedrigt, so daß die Mischung siedete. Man erniedrigte die Temperatur danach auf 60°C und fügte 830 Teile Harnstoff zu und erniedrigte die Temperatur anschließend auf 46°C. Dann fügte man 2950 Teile einer 37 %-igen wäßrigen Formaldehyd-Lösung zu und erhitzte das Reaktionsgemisch 4 Stunden zum sieden. Danach wurde das Reaktionsgemisch abgekühlt und die Zugabe von Wasser auf einen Feststoffgehalt von 30 % eingestellt. Durch Zugabe von Ameisensäure betrug der pH-Wert der fertigen Harzlösung 8.

Verwendung der Harzlösungen als Hilfsmittel bei der Herstellung von Papier.

Die Trockenreißlänge wurde gemäß DIN 53 112, Blatt 1 und die Naßreißlänge gemäß DIN 53 112, Blatt 2, bestimmt. Die Weiße der Papierblätter wurde mit Hilfe eines Reflektionsfotometers, (ELREPHO) nach DIN 53 145 bestimmt.

**Beispiel 3**

Auf einer Versuchspapiermaschine mit einer Arbeitsbreite von 75 cm wurde bei einer Geschwindigkeit von 60 Meter pro Minute ein Verpackungspapier auf Altpapierbasis (Wellpappenabfälle) mit einer Flächenmasse von 80 g/m² produziert. Der pH-Wert der Stoffsuspension wurde durch Zugabe von 3 % Aluminiumsulfat (berechnet auf Faser) und Schwefelsäure auf 4,5 eingestellt. Der Mahlgrad lag bei 40° Schopper-Riegler (°SR). Der Zusatz der Lösungen der Naßfestharze gemäß den Beispielen und der Vergleichsharz-Lösungen erfolgte jeweils im Dickstoff nach kontinuierlicher Verdünnung mit Frischwasser im Verhältnis 1 : 50. Von dem so hergestellten Papier wurden die Trocken- und Naßreißlänge bestimmt. Die Messungen sind Mittelwerte aus Längs- und Querrichtung des Papiers zur Papiermaschine. Zunächst wurde Papier hergestellt, indem man auf den Zusatz eines Trocken- und Naßfestmittels verzichtete. Dann setzte man das Harz gemäß Beispiel 1 ein und verwendete anschließend als Papierhilfsmittel das Vergleichsharz 1. Die bei unterschiedlichen Einsatzmengen erhaltenen Ergebnisse sind in Tabelle 1 angegeben.

**Tabelle 1**

| Zusatz | Trockenreiß- länge (m) | Naßreißlänge (m) ab Maschine | Naßreißlänge (m) nach Papieralterung 5 min 130°C |
|---|---|---|---|
| ohne Zusatz | 4000 | 220 | 420 |
| 0,7 % Harz gemäß Beispiel 1 | 4310 | 700 | 1280 |
| 0,7 % Vergleichsharz 1 | 4230 | 570 | 1240 |
| 1,4 % Harz gemäß Beispiel 1 | 4480 | 980 | 1660 |
| 1,4 % Vergleichsharz 1 | 4270 | 750 | 1540 |
| 2,8 % Harz gemäß Beispiel 1 | 4550 | 1150 | 2060 |
| 2,8 % Vergleichsharz 1 | 4380 | 925 | 1870 |

**Beispiel 4**

Auf der in Beispiel 3 beschriebenen Versuchspapiermaschine wurde bei einer Geschwindigkeit von 60 Meter pro Minute ein Papier aus 50 % gebleichtem Kiefernsulfatzellstoff und 50 % gebleichtem Buchensulfitzellstoff mit einer Flächenmasse von 70 g/m² hergestellt. Der Mahlgrad lag bei 30°SR, der pH-Wert betrug 4,5 und wurde durch Zugabe von 2 % Aluminiumsulfat von Schwefelsäure zum Stoff eingestellt. In Tabelle 2 sind die jeweils verwendeten Harze und deren Menge angegeben sowie die Ergebnisse, die durch den Zusatz dieser Harze im Vergleich zur Papierherstellung in Abwesenheit eines Naß- und Trockenfestmittels erzielt wurden.

**Tabelle 2**

| Zusatz | Weiße % RG^x (Siebseite) | Trockenreißlänge (m) | Naßreißlänge (m) ab Maschine | Naßreißlänge (m) nach Papieralterung 5 min 130° C |
|---|---|---|---|---|
| ohne Zusatz | 87,8 | 4260 | 0 | 245 |
| 1,0 % Harz gemäß Beispiel 2 | 87,4 | 4820 | 850 | 1910 |
| 1,0 % Vergleichsharz 1 | 87,6 | 4540 | 580 | 1690 |
| 1,0 % Vergleichsharz 2 | 87,2 | 4590 | 770 | 1800 |
| 2,0 % Harz gemäß Beispiel 2 | 86,7 | 5230 | 1210 | 2300 |
| 2,0 % Vergleichsharz 1 | 87,3 | 5050 | 840 | 2070 |
| 2,0 % Vergleichsharz 2 | 87,2 | 5060 | 1090 | 2250 |

x RG = Reflexionsgrad mit Filter 8, Papier mehrlagig

**Beispiel 3**

Zu einer Suspension eines Gebleichten Nadelsulfitzellstoffs mit einer Stoffdichte mit 0,5 %, einem pH-Wert von 4,5 (eingestellt mit Zusatz von 2 % Aluminiumsulfat und Schwefelsäure) und einem Mahlgrad von 35° SR wurden jeweils die in Tabelle 3 angegebene Menge und Art des Hilfsmittels zugesetzt und anschließend in einem zu Rapid-Köthen-Blattbildner zu Papierblättern einer Flächenmasse von 80 g/m$^2$ verarbeitet. Um die Wirksamkeit der Harzlösungen als Trocken und Naßfestmittel für Papier zu testen, wurden jeweils die Naß- und Trockenreißlänge der so hergestellten Blätter im Vergleich zu eine hilfsmittelfreien Papier bestimmt. Die Ergebnisse sind in Tabele 3 angegeben.

**Tabelle 3**

| Zusatz | Trockenreiß-länge | Naßreiß-länge (m) | Naßreißlänge (m) nach Papieralterung |
|---|---|---|---|
| ohne Zusatz | 3980 | 0 | 0 |
| 0,5 % Harz gemäß Beispiel 2 | 4410 | 510 | 895 |
| 0,5 % Vergleichsharz 3 | 4040 | 140 | 185 |
| 2,0 % Harz gemäß Beispiel 2 | 4610 | 900 | 1470 |
| 2,0 % Vergleichsharz 3 | 4130 | 190 | 210 |

Aufgrund des hohen Polyethylenimin-Gehaltes des Verlgeichsharzes 3 entfaltet dieses Produkt bei der Anwendung im Sauren pH-Bereich bei der Herstellung von Papier eine nur sehr geringe Wirksamkeit bei der Erhöhung der Naßreißlänge.

**Patentansprüche**

1. Verfahren zur Herstellung von wasserlöslichen kationischen Harnstoff-Formaldehyd-Harzen durch Kondensieren von Harnstoff und Formaldehyd im Molverhältnis 11,5 bis 3 in Gegenwart von Polyaminen, wobei man die Mischung zunächst
    a) bei pH-Werten von 8 bis 14 vorkondensiert, dann ansäuert und
    b) bei pH-Werten von 1 bis 5 bis zur beginnenden Gelbildung kondensiert,
    c) pro Mol des eingesetzten Harnstoffs 0,3 bis 1,5 Mol Formaldehyd zusetzt,
    d) eine Nachkondensation durchführt und
    e) die Harzlösung anschließend neutralisiert,
<u>dadurch gekennzeichnet,</u> daß man pro Mol Harnstoff im Endprodukt 5 bis 50 g Polyethylenimin, das 20 bis 15.000 Ethylenimin-Einheiten einpolymerisiert enthält, als Polyamin einsetzt.

2. Verwendung der nach Anspruch 1 hergestellten wasserlöslichen kationischen Harnstoff-Formaldehyd-Harze als Hilfsmittel bei der Herstellung von Papier zur Erhöhung der Trocken- und Naßfestigkeit des Papiers.

**0 123 196**

### Claims

1. A process for preparing water-soluble cationic urea-formaldehyde resins by condensing urea and formaldehyde in a molar ratio from 1 : 1.5 to 3 in the presence of polyamines, in which the mixture is first

a) precondensed at pH 8-14, then acidified and

b) condensed at pH 1-5 to the onset of getting,

c) per mole of urea used from 0.3 to 1.5 moles of formaldehyde are added,

d) a postcondensation is carried out and

e) the resin solution is subsequently neutralized, wherein per mole of urea in the end-product from 5 to 50 g of polyethyleneimine containing from 20 to 15,000 copolymerized ethyleneimine units are used as polyamine.

2. Use of the water-soluble cationic urea-formalde hyde resins prepared as claimed in claim 1 as assistants in papermaking to enhance the dry and wet strength of paper.

### Revendications

1. Procédé de préparation de résines d'urée et de formaldéhyde cationiques, solubles dans l'eau, par la condensation d'urée et de formaldéhyde dans un rapport molaire de 1 : 1,5 à 3, en présence de polyamines, conformément auquel

a) on procède d'abord à la précondensation du mélange à des valeurs de pH de 8 à 14, puis on l'acidifie et

b) on procède à sa condensation à des valeurs de pH de 1 à 5 jusqu'à formation de gel débutante,

c) on ajoute de 0,3 à 1,5 mole de formaldéhyde par mole d'urée mis en oeuvre

d) on procède à une postcondensation et

e) on neutralise ensuite la solution de résine,

caractérisé en ce que, par mole d'urée dans le produit final, on met en oeuvre, à titre de polyamine, de 5 à 50 g de polyéthylèneimine qui contient, incorporées par polymérisation, de 20 à 15.000 unités étpylèneimine.

2. Utilisation des résines d'urée et de formaldéhyde cationiques, solubles dans l'eau, préparées suivant la revendication 1, à titre d'adjuvants au cours de la fabrication du papier en vue d'augmenter la solidité ou résistance du papier à l'état sec ou à l'état mouillé.